**Europäisches Patentamt**

**European Patent Office**

**Office européen des brevets**

(19)

(11) Publication number : **0 523 019 A2**

## (12) EUROPEAN PATENT APPLICATION

(21) Application number : **92830370.0**

(22) Date of filing : **10.07.92**

(51) Int. Cl.⁵ : **A61C 13/00, A61C 13/20**

A request for correction of the claims has been filed pursuant to Rule 88 EPC. A decision on the request will be taken during the proceedings before the Examining Division (Guidelines for Examination in the EPO, A-V, 2.2).

(30) Priority : **12.07.91 IT AL910005**

(43) Date of publication of application :
**13.01.93 Bulletin 93/02**

(84) Designated Contracting States :
**AT BE CH DE DK ES FR GB GR IT LI LU MC NL PT SE**

(71) Applicant : **NOBIL METAL S.r.l.**
**49 Via Goffredo Casalis**
**I-10138 Torino (IT)**

(72) Inventor : **Venturini, Daniele**
**26 Via S. Rocco**
**I-14018 Villafranca d'Asti AT (IT)**
Inventor : **Venturini, Giuseppe**
**19 Via S. Rocco**
**I-14018 Villafranca d'Asti AT (IT)**

(74) Representative : **Bazzichelli, Alfredo et al**
**c/o Società Italiana Brevetti S.p.A. Piazza di Pietra, 39**
**I-00186 Roma (IT)**

(54) **Method for manufacturing dental prosthetic structures.**

(57)   The invention relates to a method for manufacturing dental prosthetic structures allowing these structures to be produced by means of the powder sintering technique using the materials and the heating elements commonly employed in dental mechanical practice.

EP 0 523 019 A2

The invention relates to a method for manufacturing dental prosthetic structures, in particular a method for sintering metal powders which permits production of prosthetic structures for dental use.

The construction of metallic dental structures for use as a prosthesis in consequence of the loss of one or more teeth due to pathological events or trauma normally takes place with the so-called "lost wax technique". As known to the experts in the art, the lost wax technique consists in a number of successive operations which begin with the dental surgeon taking an impression of the patient's teeth. The impression allows a mold to be made of the teeth, using which the dental technician builds a model made out of wax of the part of the prosthesis (crown, bridge, etc.) to be built out of metal. This model is incorporated into a material such as a so-called "covering material" which, on solidifying, encloses it in a thermostable "shell". A heat treatment allows the part made out of wax to be removed through suitable escapes, and leaves an envelope having a cavity in its interior preserving the proper form of the original model made out of wax. This cavity is filled with a casting of melted metal and the prosthetic part made out of metal is produced after mechanical removal of the covering, which part can be used as it is or coated with ceramic or resin for aesthetic reasons. The lost wax technique was introduced in the dental art at the beginning of the century and, although it allows good results to be achieved, it is clear, as also results from the preceding brief description, that it is a time consuming process, not lacking in difficulties. For this reason various alternative methods have been proposed, among which the methods providing the sintering of metal powders seem to be particularly promising. The compaction of metal powders through sintering is a widely employed industrial process and it is described for example in the book by C. G. Goetzel: "Treatise on Powder Metallurgy", Interscience Publishers Ltd., London 1949. The US application 4,689,197 teaches the manufacture of dental prosthesis through sintering of metal powders, optionally employing glass powder or ceramic powder. In this case the metal powders, rendered moldable with water, are molded and shaped to a prepared model of the part of prosthesis to be built, which is coated with a thin layer of wax, removed before sintering. The US application 4,828,495 describes the forming of a dental prosthesis through sintering of a paste made of metal powders and of a suitable organic binder. The paste is modeled onto a prepared mold form which it is separated by a further metal layer, also obtained by sintering. The technique of sintering of metal powders is also used in the US application 4,980,124, in which the metal powders are sintered on a thin palladium or alloy foil, which is adapted to a model of the prosthetic part to be built, this obtaining a metallic structure on which a crown made out of ceramic can be built, and which is hard to deform.

The technique of sintering metal powders as taught in the cited applications could allow production of metal prosthesis in a more rapid way, with less waste of material and with better dimensional accuracy.. However there are some problems which limit the significance of these advantages. In the first place, the metallic mixture can run on the model before sintering, thus damaging the dimensional accuracy of the product. Sometimes the imperfection can be rectified during following processes or adjustments, which sometimes comprise the addition of new material and a second sintering step, but it is clear that the real advantages of the method, i.e. the saving of material and time with respect to the lost wax technique, are greatly compromised. A second aspect relates to the sintering furnace. Practical experience has shown that the common furnaces for ceramic coating or the common preheating furnaces with which the dentistry laboratories are equipped are mostly unable to consolidate the mixture of metal powders by sintering. This fact means that the dental technician needs to provide himself with a suitable furnace, with considerable investment costs.

The object of the invention is to develop a method for manufacture of dental prosthetic structures, in particular through a process of sintering metal powders, allowing the use of the heating furnaces commonly employed in the dental practice and allowing considerable dimensional accuracy to be achieved.

The applicant has surprisingly found that running of the past of metal powders can be prevented by the appropriate use of materials commonly employed in the dental practice, and that the sintering process can be carried out successfully in the common furnaces for ceramics or in common preheating furnaces, using a suitable graphite crucible. Thus the process allows full advantage to be taken of sintering and makes it possible to obtain prosthetic structures of high dimensional accuracy, in a cheaper and faster way with respect to the lost wax technique.

Consequently, the invention consists in a method for manufacture of dental prosthetic structures made out of metal, by means of sintering. According to the present invention, the above mentioned problems relating to the sintering process are solved in the following way:

- Before sintering, the modelled part on which the metal powder has been arranged is plunged into a small paper cylinder, filled with a material, known as covering material by the experts in the art, which is in a pasty condition. This material prevents running and the deformation, and is mechanically removed according to known methods when sintering has been performed.
- Sintering is carried out in a common preheating furnace or in a furnace for ceramics, inside and underneath a graphite crucible of controlled porosity. Said crucible allows the sintering process to proceed successfully.

According to the present invention, the manufacture of a prosthetic structure provides in the first place for the formation of a model of the stump onto which the metallic construction is to be adapted. The metal powder can be laid directly onto the model, onto a replica obtained with coating material, or it can be separated from the same by means of an agent of organic or inorganic nature which is arranged in a thin layer. In a particularly advantageous embodiment this agent can be a platinum or palladium foil, with a thickness of from 0.005 and 0.1 mm and preferably between 0.01 and 0.04 mm. The foil can be cut, fixed or worked in such a manner as to achieve maximum shaping to fit the stump underneath and maximum ease of execution.

At this point the metal powder is placed in layers as it is, or preferably incorporated in an additive making placing and modelling easier. In this case a thinner can be used to make the paste more workable and adaptable. Typical non-limiting examples of additive-thinner combinations are polyethylene glycole and water, glycerine and water, butyl rubber, isobutyl rubber or natural rubber and a hydrocarbon with less than fifteen carbon atoms, polybutadiene and a hydrocarbon with less than fifteen carbon atoms, or mixtures thereof.

After modelling has been carried out, the prepared part is plunged into a previously prepared mixture. As a typical absolutely non-limiting example, the mixture fills a small paper cylinder which is open at both sides, and said mixture is made out of what is known as covering material to the experts in the art. Preferably the covering material for fusing alloys at high temperatures is used, and it is mixed with its own original liquid, or, preferably, with water. Afterwards the mixture is dried at room temperature or by heating, and is placed in the furnace underneath a graphite crucible. The graphite has a porous surface with pore dimensions of between 0.001 and 1000 um, preferably of from 0.001 to 100 um. The dimensions of the crucible are not limited and can be such as to cover the whole surface area of the furnace, as long as the correct porosity is ensured. After sintering has been carried out, the covering material is removed and the following operations are carried out according to techniques known from the state of the art.

The significance of the invention cannot escape the attention of the experts in this field. The manufacture of prosthetic structures such as crowns, bridges, etc. results to be considerably simplified by the present method, allowing the advantages of the sintering process to be exploited using common materials and tools. In the following some explanatory examples are described, which in no way limit the significance of the invention.

Example 1

A metallic crown was constructed under the following conditions:

Some polybutadiene (Jansenn Chimica) was added to a certain amount of powder of the alloy New Ceramit (Nobil-Metal, Villafranca, AT). A stump was prepared, to which a Pt foil with a thickness of 0.02 mm (Nobil-Metal, Villafranca, AT) was fitted. The foil was coated with the paste thinned with decane (Jansenn Chimica) and modelled. Sintering was carried out in a furnace for ceramics Compact 20, (Nobil-Metal, Villafranca, AT), which was kept at a temperature of 1050°°C for eight minutes. In a first case, the part to be sintered was covered with a graphite crucible with smooth walls; in a second case with a graphite crucible with pores having' a dimension in the order of 0.1 mm (as evaluated by microscopy); and in a third case the crucible was not used. The results of sintering were evaluated by visual observation of the product and were classified in steps from 1 to 5, 1 meaning that the product has not undergone compaction and 5 meaning that the product has a density suitable for its employment. The test was repeated three times for each series, and the results, expressed as an average of the observations, are listed in the following table:

| Condition | Result |
| --- | --- |
| smooth crucible | 1 |
| porous crucible | 5 |
| without crucible | 1 |

Example 2

The same test as the one shown in example 1 was repeated with powder of the alloy Keramit 960 and a Pd foil (both Nobil-Metal, Villafranca, AT). The following results were obtained:

3

| Condition | Result |
|---|---|
| smooth crucible | 1 |
| porous crucible | 5 |
| without crucible | 1 |

Example 3

A metallic crown was made using the alloys and conditions described above, using in each case the porous graphite crucible. Before sintering, in a first case the modelled part was placed in a mixture of covering material and water, while in another case it was sintered directly. The results have been evaluated on the basis of visual observation of the product, which is judged as being "suitable" or "unsuitable" for final use. The results are listed in the following table:

| Alloy/foil | Mixture | Result |
|---|---|---|
| New Ceramit/Pd | No | not suitable |
| New Ceramit/Pd | Yes | suitable |
| New Ceramit/Pt | No | not suitable |
| New Ceramit/Pt | Yes | suitable |
| Keramit 960/Pd | No | not suitable |
| Keramit 960/Pd | Yes | suitable |
| Keramit 960/Pt | No | not suitable |
| Keramit 960/Pt | Yes | suitable |

Example 4

A bridge with three elements was built with a powder of New Ceramit alloy and in the conditions according to example 3. The results have been evaluated on the basis of a visual observation of the product, which is judged as being "suitable" or "unsuitable" for final use. The results are listed in the following table:

| Alloy/foil | Mixture | Result |
|---|---|---|
| New Ceramit/Pd | No | not suitable |
| New Ceramit/Pd | Yes | suitable |
| New Ceramit/Pt | No | not suitable |
| New Ceramit/Pt | Yes | suitable |

**Claims**

1. A method for manufacture of metallic dental prosthetic structures, comprising the following steps:
   - forming a model of the dental part to be produced;
   - coating said model with metal powder;
   - incorporating said model coated with metal powder into a small block of covering material;
   - sintering said model coated with metal powder and incorporated into said small block of covering material in a furnace.

2. Method according to claim 1, in which said small block of covering material incorporating said model coated with metal powder is placed in said furnace within a muffle or within and underneath a crucible of graphite

4

with a predetermined porosity.

3. Method according to claim 1 or 2, in which said covering material is a paste and said small block of covering material incorporating said metal coated model therein is dried before the sintering operation.

4. Method according to any one of the preceding claims, in which the metal powder is applied on a replica of the model.

5. Method according to any one of the preceding claims, in which a thin separating layer comprising an insulating agent is interposed between said layer of metallic powder and said model.

6. Method according to claim 5, in which said insulating agent is a metal foil.

7. Method according to claim 6, in which said metal foil is a platinum foil.

8. Method according to claim 6, in which said metal foil is a palladium foil.

9. Method according to any one of the preceding claims, in which a plurality of prepared stumps are treated at the same time.

10. Method according to any one of the preceding claims, in which a ceramic coating process or a coating process with resins is carried out after said sintering step.

11. Method according to any one of the preceding claims, in which said metal powder is an alloy comprising at least 70% of palladium.

12. Method according to claim 6, in which said metal powder is an alloy comprising at least 50% of gold.

13. Method according to any one of the preceding claims, in which organic compounds are added to the metal powder.

14. Method according to claim 13, in which said metal powder additioned with organic compounds is thinned with thinner agents.

15. Method according to claim 14, in which combinations of additive-thinners are polyethylene glycole and water, glycerine and water, butyl, isobutyl or natural rubber and a hydrocarbon with less than fifteen carbon atoms, polybutadiene and a hydrocarbon with less than fifteen carbon atoms, or mixtures of thereof.

16. Method according to any one of the preceding claims, in which said covering material is selected from those capable of fusing alloys at high temperatures.

17. Method according to claim 16, in which said covering material is mixed with water.

18. Method according to any one of the preceding claims, in which the porosity of said graphite crucible is from 0.001 to 1000 um.

19. Method according to any one of the preceding claims, further comprising placing said covering material in a pasty state in a partially open vessel and incorporating therein said model covered with metal powder.